# EUROPEAN PATENT APPLICATION

(11) **EP 4 617 936 A1**
(43) Date of publication of application: **17.09.2025**
(21) Application number: 25164220.3
(22) Date of filing: 17.03.2025
(51) Int. Cl.: G06F 30/15, G06F 30/27, G06N 20/00, G06F 119/14, G06N 3/08, G06T 17/00

(54) **SYSTEM AND METHOD FOR GENERATING A PRELIMINARY DESIGN OF A STRUCTURAL ARCHITECTURE FOR AN AIRCRAFT PROPULSION SYSTEM**

(30) Priority: 15.03.2024 US 202418606815
(71) Applicant: PRATT & WHITNEY CANADA CORP., Longueuil, Québec J4G 1A1 (CA)
(72) Inventor: HO, Eric, Longueuil, J4G 1A1 (CA); FANG, Jing, Longueuil, J4G 1A1 (CA)
(74) Representative: Dehns

(57) **Abstract**

A method for generating a preliminary design of a propulsion system structural architecture for an aircraft propulsion system includes generating, with an artificial intelligence (AI) model (600) at a computer system (400), one or both of at least one two-dimensional image and/or at least one three-dimensional model of the preliminary design including a selected combination of geometric parameters (804). The AI model has been trained for both a propulsion system geometry using the geometric parameters extracted from historical geometry data (408A) and a propulsion system structural design using the geometric parameters and operational parameters of historical operational data (408B). The operational parameters are associated with the geometric parameters. Training the AI model included identifying the selected combination of geometric parameters of the preliminary design, with the AI model, by determining a plurality of combinations of the extracted geometric parameters and the associated operational parameters which satisfy each of at least one technical constraint (520B) and at least one customer constraint (520A) and selecting the selected combination of geometric parameters from the plurality of combinations of the extracted geometric parameters using the associated operational parameters.

## Description

### TECHNICAL FIELD

This disclosure relates to systems and methods for generating a preliminary design of a structural architecture for an aircraft propulsion system and/or aircraft engine using an artificial intelligence (Al) model.

### BACKGROUND OF THE ART

A design process for an aircraft propulsion system includes identifying a suitable aircraft propulsion system design which accommodates a substantial quantity of design constraints. Various systems and methods are known in the art for designing or facilitating the design of an aircraft propulsion system. While these known systems and methods may be suitable for their intended purposes, there is always room in the art for improvement.

### SUMMARY

It should be understood that any or all of the features or embodiments described herein can be used or combined in any combination with each and every other feature or embodiment described herein unless expressly noted otherwise.

According to an aspect of the present disclosure, a method for generating a preliminary design of a propulsion system structural architecture for an aircraft propulsion system includes generating, with an artificial intelligence (Al) model at a computer system, one or both of at least one two-dimensional image and/or at least one three-dimensional model of the preliminary design including a selected combination of geometric parameters. The Al model has been trained for both a propulsion system geometry using the geometric parameters extracted from historical geometry data and a propulsion system structural design using the geometric parameters and operational parameters of historical operational data. The operational parameters are associated with the geometric parameters. Training the Al model included identifying the selected combination of the geometric parameters of the preliminary design, with the Al model, by determining a plurality of combinations of the extracted geometric parameters and the associated operational parameters which satisfy each of at least one technical constraint and at least one customer constraint and selecting the selected combination of the geometric parameters from the plurality of combinations of the extracted geometric parameters using the associated operational parameters.

In any of the aspects or embodiments described above and herein, the historical geometry data may include one or both of an engine mounting hardware dimension or an engine mounting hardware location for at least one historical propulsion system.

In any of the aspects or embodiments described above and herein, the historical geometry data may include one or both of at least one historical two-dimensional image or at least one historical three-dimensional model for at least one historical propulsion system.

In any of the aspects or embodiments described above and herein, the associated operational parameters may include one or more of a carcass load, a rotor blade tip clearance, a component inertial load, a component bending moment, a component deflection, a propulsion system thrust characteristic, a component weight, a component material characteristic, a component temperature, or a component fluid exposure pressure for at least one historical propulsion system.

In any of the aspects or embodiments described above and herein, associating the extracted geometric parameters with the operational parameters may include identifying a correlation factor between at least one geometric parameter of the extracted geometric parameters and at least one operational parameter of the associated operational parameters.

In any of the aspects or embodiments described above and herein, the method may further include executing, at the computer system, a finite element method (FEM) analysis of the one or both of at least one two-dimensional image or at least one three-dimensional model of the preliminary design and identifying, at the computer system, an acceptance or a rejection of the preliminary design using the FEM analysis.

In any of the aspects or embodiments described above and herein, the Al model may include a plurality of neural networks. The plurality of neural networks may include at least a convolutional neural network.

In any of the aspects or embodiments described above and herein, the at least one customer constraint may include one or more of a propulsion system mounting position, a propulsion system envelope, a propulsion system weight limit, a propulsion system aerodynamic specification, a propulsion system maneuvering requirement, or a propulsion system propulsion requirement.

In any of the aspects or embodiments described above and herein, the method may further include preparing a final propulsion system design of the propulsion system structural architecture using the preliminary design.

In any of the aspects or embodiments described above and herein, the method may further include storing the final propulsion system design with historical data in a database. The historical data may include the historical geometry data and the historical operational data.

According to another aspect of the present disclosure, a system for generating a preliminary design of a propulsion system structural architecture for an aircraft propulsion system includes a processor in communication with a non-transitory memory storing instructions, which instructions when executed by the processor, cause the processor to execute an artificial intelligence (AI) model trained for both a propulsion system geometry using geometric parameters extracted from historical geometry data and stored in the memory and a propulsion system structural design using the geometric parameters and operational parameters of historical operational data. The operational parameters are associated with the geometric parameters and stored in the memory. The instructions, when executed by the processor, further cause the processor to identify a selected combination of the geometric parameters of the preliminary design, with the Al model, by determining a plurality of combinations of the extracted geometric parameters using the associated operational parameters which satisfy each of at least one technical constraint and at least one customer constraint and selecting the selected combination of propulsion system structural parameters from the plurality of combinations of the extracted geometric parameters and the associated operational parameters including an expected engine deflection of the propulsion system and weighted performance factors of the at least one technical constraint and the at least one customer constraint, and generate, with the Al model, one or both of at least one two-dimensional image or at least one three-dimensional model of the preliminary design including the selected combination of the geometric parameters.

In any of the aspects or embodiments described above and herein, the Al model may include a plurality of neural networks and the instructions, when executed by the processor, may further cause the processor to train the Al model for the propulsion system geometry including extracting the geometric parameters of the historical geometry data with at least one first neural network of the plurality of neural networks and train the Al model for the propulsion system structural design including associating the extracted geometric parameters with the operational parameters with at least one second neural network of the plurality of neural networks. The at least one first neural network may be different than the at least one second neural network.

In any of the aspects or embodiments described above and herein, generating the one or both of at least one two-dimensional image or at least one three-dimensional model of the preliminary design may include generating the one or both of at least one two-dimensional image or at least one three-dimensional model of the preliminary design including the selected combination of the geometric parameters with at least one third neural network of the plurality of neural networks. The at least one third neural network may be different than the at least one first neural network and the at least one second neural network.

In any of the aspects or embodiments described above and herein, the historical geometry data may include one or both of at least one historical two-dimensional image or at least one historical three-dimensional model for at least one historical propulsion system.

In any of the aspects or embodiments described above and herein, the associated operational parameters may include one or more of a carcass load, a rotor blade tip clearance, a component inertial load, a component bending moment, a component deflection, a propulsion system thrust characteristic, a component weight, a component material characteristic, a component temperature, or a component fluid exposure pressure for at least one historical propulsion system.

According to another aspect of the present disclosure, a method for generating a preliminary design of an engine structural architecture for an aircraft includes generating, with an artificial intelligence (AI) model at a computer system, one or both of at least one two-dimensional image or at least one three-dimensional model of the preliminary design including a selected combination of geometric parameters. The Al model has been trained for both an engine structure geometry using the geometric parameters extracted from historical geometry data for the engine structure geometry and an engine structural design using the geometric parameters and operational parameters of historical operational data. The operating parameters are associated with the geometric parameters. Training the Al model included identifying the selected combination of the geometric parameters of the preliminary design with the Al model, the selected combination of the geometric parameters satisfying at least one technical constraint and at least one customer constraint.

In any of the aspects or embodiments described above and herein, the historical geometry data may include one or both of an engine mounting hardware dimension or an engine mounting hardware location for at least one historical propulsion system.

In any of the aspects or embodiments described above and herein, the historical geometry data may include one or both of at least one historical two-dimensional image or at least one historical three-dimensional model for at least one historical propulsion system.

In any of the aspects or embodiments described above and herein, the associated operational parameters may include one or more of a carcass load, a rotor blade tip clearance, a component inertial load, a component bending moment, a component deflection, a propulsion system thrust characteristic, a component weight, a component material characteristic, a component temperature, or a component fluid exposure pressure for at least one historical propulsion system.

In any of the aspects or embodiments described above and herein, associating the extracted geometric parameters with the operational parameters includes identifying a correlation factor between at least one geometric parameter of the extracted geometric parameters and at least one operational parameter of the associated operational parameters.

The present disclosure, and all its aspects, embodiments and advantages associated therewith will become more readily apparent in view of the detailed description provided below, including the accompanying drawings. The detailed description and accompanying drawings show merely example embodiments and are not intended to be limiting.

### DESCRIPTION OF THE DRAWINGS

FIG. 1 illustrates a perspective view of an aircraft including a propulsion system.
FIG. 2 schematically illustrates a cutaway, side view of a propulsion system for an aircraft.
FIGS. 3A-D illustrate various aircraft propulsion system and engine configurations.
FIG. 4 diagrammatically illustrates a computer system.
FIG. 5 illustrates a block diagram depicting a method generating a preliminary design of a structural architecture using an artificial intelligence (AI) model and one or more evaluation processes.
FIG. 6 diagrammatically illustrates an Al model executed using the computer system of FIG. 4.
FIG. 7 illustrates a block diagram depicting portions of the method of FIG. 5 in greater detail.
FIG. 8 schematically illustrates a neural network for an Al model.
FIG. 9 illustrates a block diagram depicting portions of the method of FIG. 5 in greater detail.

### DETAILED DESCRIPTION

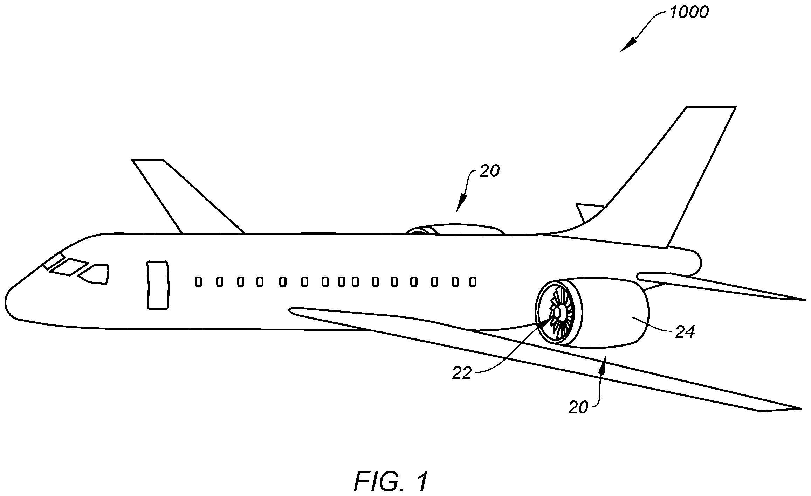

Aspects of the present disclosure are directed to systems and methods for designing a propulsion system and/or engine structural architecture for an aircraft, such as the aircraft 1000 of FIG. 1. The aircraft 1000 of FIG. 1 includes at least one propulsion system 20. The propulsion system 20 of FIG. 1 includes a gas turbine engine 22 and a nacelle 24. The propulsion system 20 may be mounted to a portion of the aircraft 1000, such as the aircraft 1000 fuselage or one of the aircraft 1000 wings, for example, by the nacelle 24 and/or internal mounting hardware of the propulsion system 20. While the aircraft 1000 of FIG. 1 is illustrated as a fixed-wing aircraft (e.g., an airplane), aspects of the present disclosure are equally applicable to a rotary-wing aircraft (e.g., a helicopter), a tilt-rotor aircraft, a tilt-wing aircraft, or another aerial vehicle. Moreover, the aircraft may be a manned aerial vehicle or an unmanned aerial vehicle (UAV, e.g., a drone).

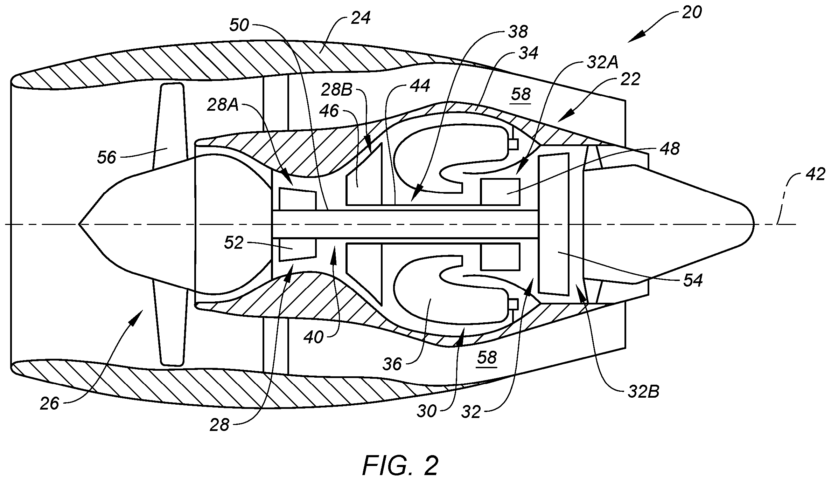

FIG. 2 illustrates a cutaway, side view of the propulsion system 20 including the gas turbine engine 22 and the nacelle 24. The gas turbine engine 22 of FIG. 2 is configured as a multi-spool turbofan gas turbine engine. However, while the following description and accompanying drawings may refer to the turbofan gas turbine engine of FIG. 2 as an example, it should be understood that aspects of the present disclosure may be equally applicable to other types of gas turbine engines including, but not limited to, a turboshaft gas turbine engine, a turboprop gas turbine engine, a turbojet gas turbine engine, a propfan gas turbine engine, or an open rotor gas turbine engine. Moreover, aspects of the present disclosure may be equally applicable to aircraft propulsion systems including other engine configurations such as, but not limited to, rotary engines, piston engines, and the like.

The gas turbine engine 22 of FIG. 2 includes a fan section 26, a compressor section 28, a combustor section 30, a turbine section 32, and an engine static structure 34. The compressor section 28 of FIG. 2 includes a low-pressure compressor (LPC) 28A and a high-pressure compressor (HPC) 28B. The combustor section 30 includes a combustor 36 (e.g., an annular combustor). The turbine section 32 includes a high-pressure turbine (HPT) 32A and a low-pressure turbine (LPT) 32B.

Components of the fan section 26, the compressor section 28, and the turbine section 32 form a first rotational assembly 38 (e.g., a high-pressure spool) and a second rotational assembly 40 (e.g., a low-pressure spool) of the gas turbine engine 22. The first rotational assembly 38 and the second rotational assembly 40 are mounted for rotation about a rotational axis 42 (e.g., an axial centerline of the gas turbine engine 22) relative to the engine static structure 34.

The first rotational assembly 38 includes a first shaft 44, a first compressor rotor 46 for the high-pressure compressor 28B, and a first turbine rotor 48 for the high-pressure turbine 32A. The first shaft 44 interconnects the first compressor rotor 46 and the first turbine rotor 48.

The second rotational assembly 40 includes a second shaft 50, a second compressor rotor 52 for the low-pressure compressor 28A, and a second turbine rotor 54 for the low-pressure turbine 32B. The second shaft 50 interconnects the second compressor rotor 52 and the second turbine rotor 54. The second shaft 50 may additionally be directly or indirectly coupled to a bladed fan rotor 56 for the fan section 26. The first shaft 44 and the second shaft 50 of FIG. 2 are concentric and configured to rotate about the rotational axis 42. The present disclosure, however, is not limited to concentric configurations of the first shaft 44 and the second shaft 50.

The engine static structure 34 may include one or more engine cases, cowlings, bearing assemblies, and/or other non-rotating structures configured to house and/or support (e.g., rotationally support) components of the gas turbine engine 22 sections 26, 28, 30, 32.

The nacelle 24 forms an exterior aerodynamic housing for the propulsion system 20. The nacelle 24 of FIG. 2 extends circumferentially about (e.g., completely around) the gas turbine engine 22 (e.g., the rotational axis 42). The nacelle 24 is mounted to the gas turbine engine 22 (e.g., the engine static structure 34) at one or more locations to securely position the gas turbine engine 22 within the nacelle 24 and to facilitate mounting of the propulsion system 20 and its gas turbine engine 22 onto the aircraft 1000 (see FIG. 1), for example, using a pylon or other mounting structure. The nacelle 24 of FIG. 2 surrounds and forms an annular bypass duct 58 between (e.g., radially between) the gas turbine engine 22 (e.g., the engine static structure 34) and the nacelle 24.

As will be discussed in further detail, the gas turbine engine 22 (e.g., the engine static structure 34) and/or the nacelle 24 additionally form mounting hardware and/or other attachment structure of the propulsion system 20, for example, to securely mount the gas turbine engine 22 to the nacelle 24 and the gas turbine engine 22 and the nacelle 24 to the aircraft 1000 (see FIG. 1). Examples of mounting hardware include, but are not limited to, mounting pads, engine mounting rings, bracing members (e.g., struts), mounting linkages, mounting brackets, flanges, vibration isolators, mechanical fasteners, and the like, configured to support the propulsion system 20 and transmit loads (e.g., propulsion loads) imposed by the gas turbine engine 22 to the aircraft 1000.

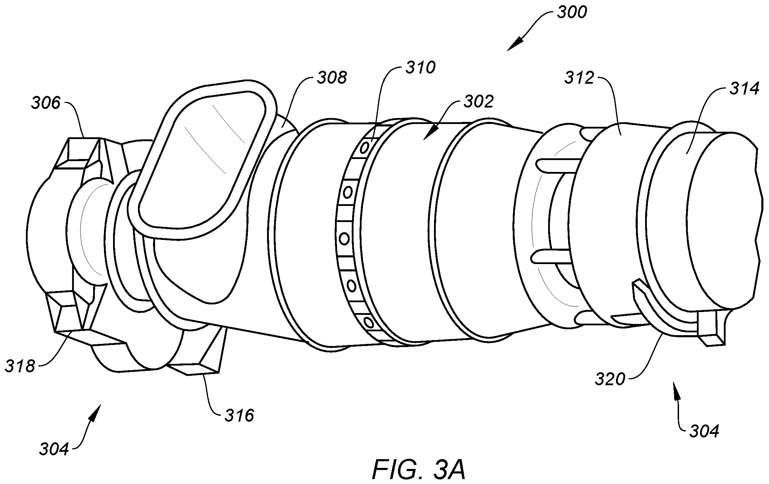

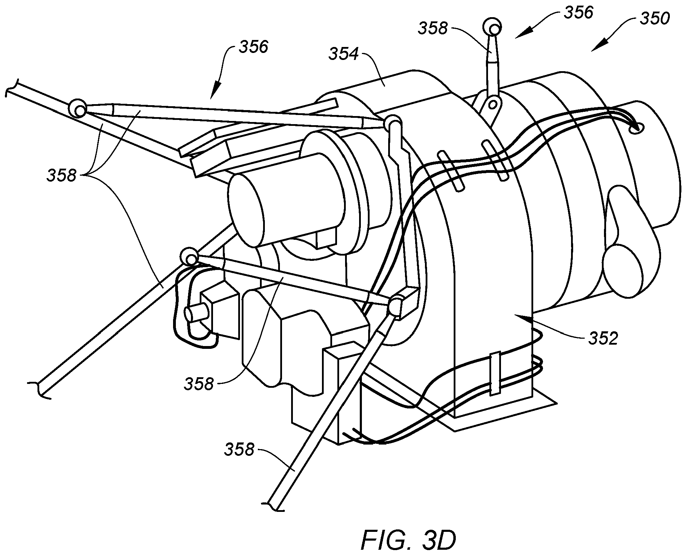

FIGS. 3A-C illustrate a plurality of different aircraft propulsion system 300 configurations. FIG. 3D illustrates an auxiliary power unit 350 (APU) for an aircraft (e.g., the aircraft 1000; see FIG. 1). Each of the propulsion systems 300 and the APU 350 of FIGS. 3A-D includes a static structure 302, 354 (e.g., an engine static structure, a nacelle, etc.) forming and/or including mounting hardware 304, 356 configured to facilitate mounting the propulsion systems 300 and the APU 350 directly or indirectly to a fixed aircraft structure (e.g., a fuselage, a wing, etc.). The static structure 302, 354 (e.g., a propulsion system structure, an engine structure, etc.) forms at least a portion of a structural architecture for each of the respective aircraft propulsion system 300 and APU 350 configurations. As used herein, the term structural architecture refers to the engine casings (e.g., compressor casings, turbine casings, etc.), mounting systems and hardware, bearing assemblies, nacelles and other propulsion system attachment hardware, gearboxes (e.g., a reduction gear box, an auxiliary gear box), inlet structures, exhaust structures, and other static structures of an aircraft propulsion system and/or engine.

The propulsion system 300 of FIG. 3A is configured with a turboprop gas turbine engine. The static structure 302 of FIG. 3A includes, in a forward to aft direction, a reduction gearbox 306, an inlet case 308, an engine case 310, an exhaust case 312, and an accessory gearbox 314 assembled together to form a portion of the static structure 302 and support components of the propulsion system 300 (e.g., the turboprop gas turbine engine). The reduction gearbox 306 of FIG. 3A forms a first forward mounting pad 316 and a second forward mounting pad 318 of the mounting hardware 304 of FIG. 3A. The exhaust case 312 of FIG. 3A forms an aft mounting pad 320 of the mounting hardware 304 of FIG. 3A.

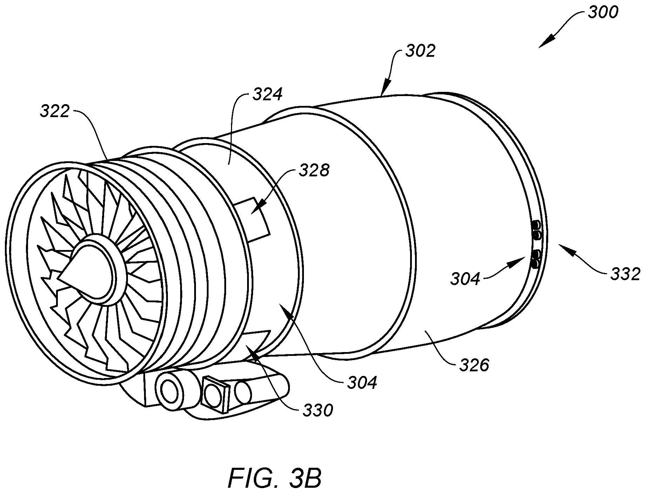

The propulsion system 300 of FIG. 3B is configured with a turbofan gas turbine engine. The static structure 302 of FIG. 3B includes, in a forward to aft direction, a fan case 322, a diffuser case 324, and a nacelle inner barrel 326 assembled together to form a portion of the static structure 302 and support components of the propulsion system 300 (e.g., the turbofan gas turbine engine). The fan case 322 and/or the diffuser case 324 form an upper forward mounting pad 328 and a lower forward mounting pad 330 of the mounting hardware 304 of FIG. 3B. The nacelle inner barrel 326 forms an aft mounting pad 332 of the mounting hardware 304 of FIG. 3B.

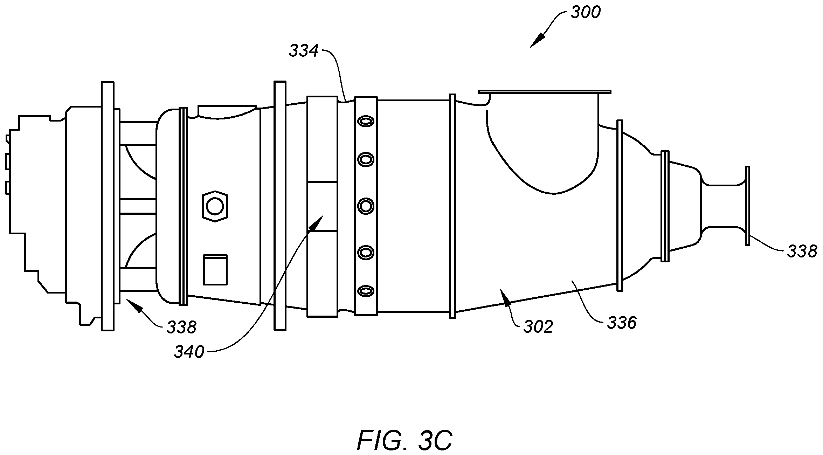

The propulsion system 300 of FIG. 3C is configured with a turboshaft gas turbine engine. The static structure 302 of FIG. 3B includes, in a forward to aft direction, a gas generator case 334 (GGC) and an exhaust case 336 assembled together to form a portion of the static structure 302 and support components of the propulsion system 300 (e.g., the turboshaft gas turbine engine). The static structure 302 of FIG. 3C forms one or more mounting flanges 338, mounting pads 340, and/or other mounting attachment points of the mounting hardware 304 of FIG. 3C.

The APU 350 of FIG. 3D includes an engine 352 (e.g., a gas turbine engine) configured generate compressed bleed air for an aircraft and/or its propulsion systems, to drive rotation of an electric generator to provide electrical power for an aircraft, and/or to facilitate other support functions. The APU 350 may typically be disposed in a tail section of an aircraft fuselage, however, the present disclosure is not limited to any particular APU 350 location. The APU 350 includes the static structure 354 (e.g., an engine static structure) forming and/or including the mounting hardware 356 configured to facilitate mounting the APU 350 directly or indirectly to a fixed aircraft structure (e.g., a fuselage). The mounting hardware 356 of FIG. 3D, for example, includes a plurality of mounting linkages 358.

The static structures 302, 354 of the propulsion systems 300 and the APU 350 of FIGS. 3A-D is exemplary and the present disclosure is not limited to the particular static structure and/or mounting hardware discussed above with respect to FIGS. 3A-D.

The structural architecture of an aircraft propulsion system may affect the structural characteristics of the propulsion system, for example, an overall casing stiffness of the static structure of the propulsion system. The propulsion system architecture may also affect the operating characteristics of the propulsion system such as, but not limited to, aircraft maneuvering capabilities, engine thrust capabilities, and the like. The propulsion system architecture may also impact the distribution of loading and moments on the propulsion system, thereby affecting engine deflections, rotor blade tip clearances (e.g., for the bladed rotors 46, 48, 52, 54, 56; see FIG. 2), propulsion system component fit up (e.g., steps and gaps), and the like.

A typical propulsion system design process may begin with a customer request for a given set of aircraft propulsion system installation requirements. To satisfy the installation requirements, the propulsion system (e.g., an engine of the propulsion system) will, for example, need to fit into a physical envelope and weight range, and at the same time satisfy propulsion system and/or engine structural architecture best practices for given propulsion maneuvers and engine power delivery requirements of the aircraft for which the propulsion system will be designed. Conventionally, a propulsion system architecture of an existing propulsion system may be used as an initial template for the new propulsion system design. This approach may help to prevent deviation from propulsion system and/or engine structural architecture best practices, but may also carry over design characteristics of the existing propulsion system and/or engine which are not optimal for the new propulsion system and/or engine design and/or which limit innovation opportunities for the new propulsion system and/or engine design.

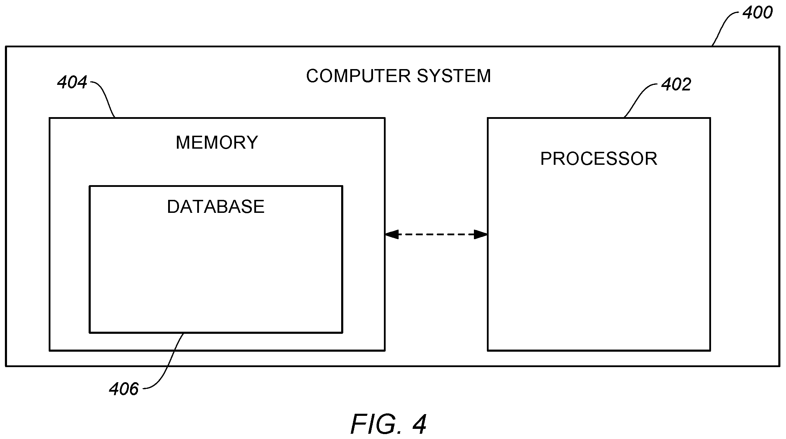

FIG. 4 diagrammatically illustrates a computer system 400 configured to implement one or more aspects of the present disclosure. However, the present disclosure is not limited to the particular computer system 400 of FIG. 4. A person of skill in the art will recognize that portions of the computer system 400 may assume various forms (e.g., digital signal processor, analog device, etc.) capable of performing the functions described herein. The computer system 400 of FIG. 4 includes a processor 402 and memory 404. The processor 402 may include any type of computing device, computational circuit, processor(s), central processing unit (CPU), graphics processing unit (GPU), computer, or the like capable of executing a series of instructions that are stored in memory 404. Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. The instructions may include an operating system, and/or executable software modules such as program files, system data, buffers, drivers, utilities, and the like. The executable instructions may apply to any functionality described herein to enable the computer system 400 to accomplish the same algorithmically and/or coordination of computer system 400 components. The memory 404 may include a single memory device or a plurality of memory devices; e.g., a computer-readable storage device that can be read, written, or otherwise accessed by a general purpose or special purpose computing device, including any processing electronics and/or processing circuitry capable of executing instructions. The present disclosure is not limited to any particular type of memory device, which may be non-transitory, and may include read-only memory, random access memory, volatile memory, non-volatile memory, static memory, dynamic memory, flash memory, cache memory, volatile or non-volatile semiconductor memory, optical disk storage, magnetic disk storage, magnetic tape, other magnetic storage devices, or any other medium capable of storing one or more instructions, and/or any device that stores digital information. The memory device(s) maybe directly and/or indirectly coupled to the computer system 400. As shown in FIG. 4, the memory 404 may additionally include a database 406. The computer system 400 may include, or may be in communication with, a user interface including one or more inputs devices and/or one or more output devices, for example, an input device that enables a user to enter data and/or instructions and an output device configured to display information (e.g., a visual display or a printer), or to transfer data, etc. Communications between the components of the computer system 400 and/or between the computer system 400 and external electronic devices may be via a hardwire connection or via a wireless connection.

The computer system 400 of the present disclosure may be configured to implement a computer-aided drafting (CAD) and/or a computer-aided manufacturing (CAM) system, platform, and/or software (referred to herein as a "CAD environment") which is capable of generating, manipulating, and assembling two-dimensional (2D) drawings and/or three-dimensional (3D) models of a component and/or an assembly of components (e.g., an aircraft propulsion system). The present disclosure is not limited to any particular CAD or CAM system, platform, or software. The 3D models may be a mathematical coordinate-based representation of the geometric features of components and/or component assemblies in three dimensions. The 2D drawings and/or 3D models may be generated algorithmically, as will be discussed in further detail. The 3D models may be defined by a solid model, a shell or boundary model, or another suitable 3D model representation using any suitable representation technique including, but not limited to, boundary definition representation, point cloud representation, and the like. The computer system 400 may additionally be suitable for execution and/or control of all or a portion of a finite element method (FEM) analysis an aircraft propulsion system and/or aircraft engine design.

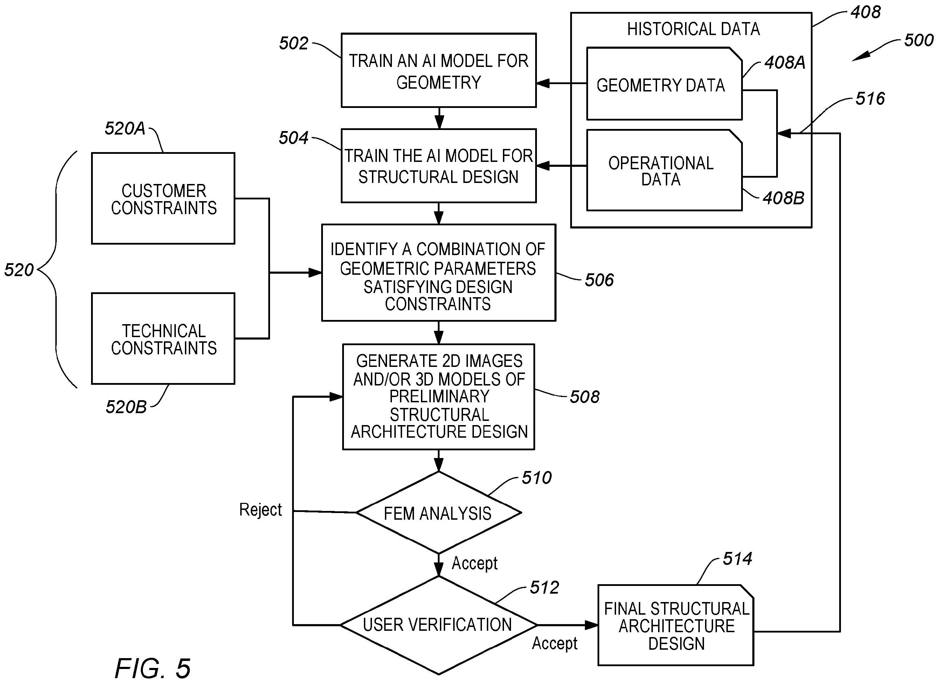

Referring to FIG. 5, a Method 500 for generating a preliminary design of an aircraft propulsion system structural architecture and/or an aircraft engine structural architecture using an artificial intelligence (AI) model is provided. The preliminary design for the structural architecture may include, for example, a (e.g., only a) design for an engine (e.g., a gas turbine engine) of the propulsion system, an engine and a nacelle of the propulsion system, an engine and an aircraft structure of the propulsion system, etc. FIG. 5 illustrates a flowchart for the Method 500. The Method 500 may be performed using the computer system 400 described herein. The computer system 400 may be used to execute or control one or more steps of the Method 500. For example, the processor 402 may execute instructions stored in memory 404, thereby causing the computer system 400 and/or its processor 402 to execute or otherwise control one or more steps of the Method 500. However, it should be understood that the Method 500 is not limited to use with the computer system 400 described herein. Unless otherwise noted herein, it should be understood that the steps of Method 500 are not required to be performed in the specific sequence in which they are discussed below and, in various embodiments, the steps of Method 500 may be performed separately or simultaneously. Further, it should be understood that not all of the steps of the Method 500, discussed below, may be required unless otherwise described herein.

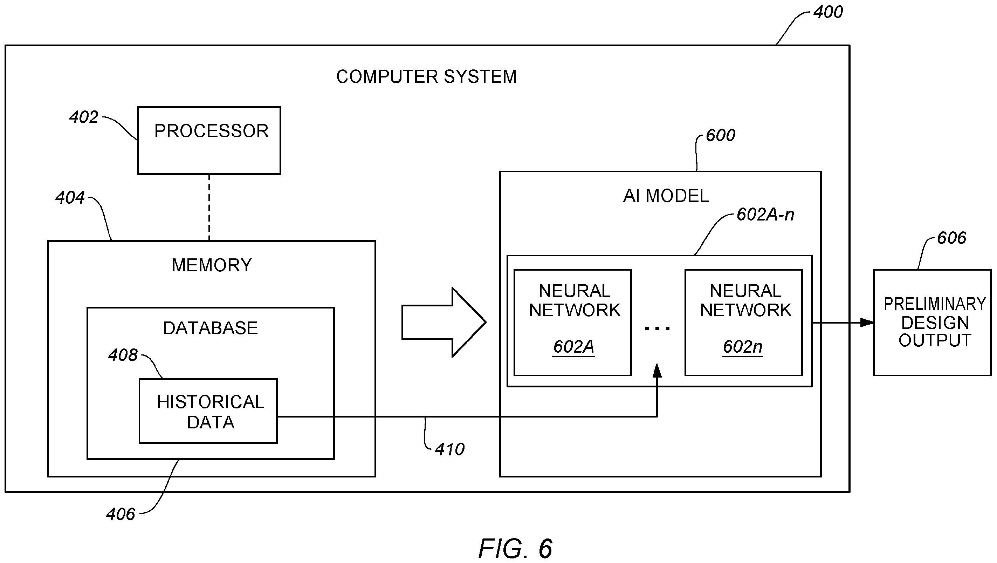

As will be discussed in greater detail, portions (e.g., steps) of the Method 500 may be executed, all or in part, by an Al model. FIG. 6 illustrates an Al model 600 including a plurality of artificial neural networks (ANNs) 602A-n executed by the computer system 400, for example, by the processor 402 using instructions stored in the memory 404, to generate a preliminary design output 606 (e.g., one or more two-dimensional images and/or one or more three-dimensional models of the preliminary design). The database 406 may store and provide historical data 408 as training data 410 for training the Al model 600 and its plurality of artificial neural networks 602A-n. As will be discussed in further detail, the historical data 408 may include, but is not limited to, flight data, 2D images and/or 3D models of existing propulsion systems, engines, and/or components thereof, test data, performance data, simulation data, finite element method (FEM) analysis data, etc. The plurality of artificial neural networks 602A-n may include, but are not limited to, variational autoencoders (VAEs), evolutionary algorithms, convolutional neural networks (CNNs), graph neural networks (GNNs), generative adversarial networks (GANs), recurrent neural networks (RNNs; e.g., a long short-term memory (LSTM) neural network), and combinations thereof. Routine experimentation and/or analysis may be performed by one of ordinary skill in the art to select one or more neural networks conventionally known in the art, in accordance with and as informed by one or more aspects of the present disclosure.

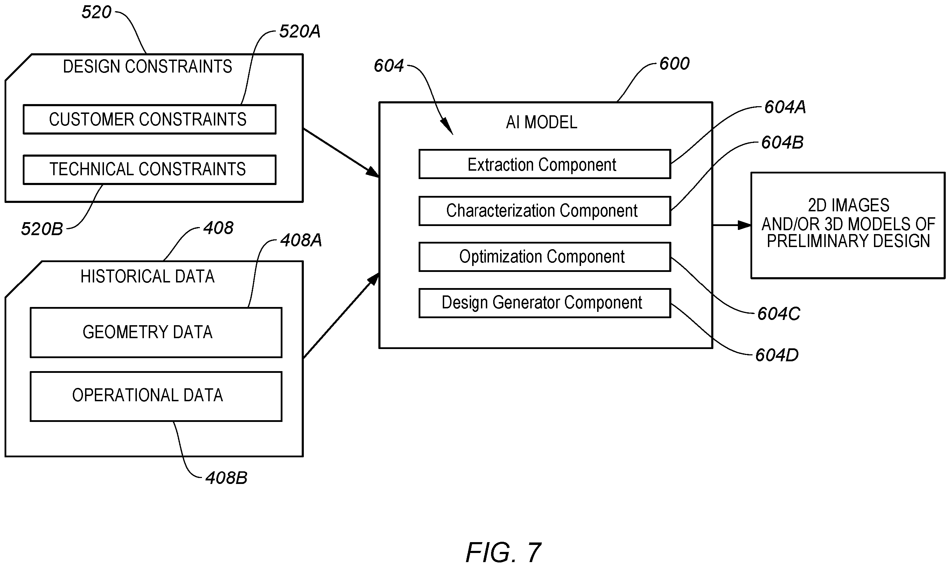

FIG. 7 illustrates a flowchart depicting portions (e.g., steps) of the Method 500 of FIG. 5 in greater detail with reference to components 604 of the Al model 600 including an extraction component 604A, a characterization component 604B, an optimization component 604C, and a design generator component 604D.

Referring now to FIGS. 5-7, Step 502 includes training the Al model 600 for propulsion system geometry using the historical data 408. In particular, training the Al model 600 for propulsion system geometry includes training the Al model 600 using 2D drawings (e.g., 2D images such as cross-sectional drawings) and/or 3D models of preexisting propulsion system and/or engine designs (hereinafter "geometry data" 408A) of the historical data 408 stored in the database 406. The geometry data 408A may be parameterized to further describe geometric characteristics of the propulsion system components of the geometry data 408A using a plurality of independent geometry data parameters. For example, the geometry data 408A may include dimensions (e.g., lengths, widths, heights, areas, radii, curvatures, thicknesses, gaps, etc.) of the different propulsion system components of the geometry data 408A. These dimensions may be expressed in the form of geometric dimensioning and tolerancing (GD&T) parameters. The geometry data 408A may additionally include relative positions of propulsion system components and component geometric features, for example, relative to a 2D or 3D coordinate system. The some or all of the propulsion system components and/or the component geometric features may be identified (e.g., tagged by a human user) in the geometry data 408A. The propulsion system components and/or the component geometric features may be identified, for example, as a propulsion system and/or engine configuration (e.g., a turboprop gas turbine engine, a turbofan gas turbine engine, etc.), a gearbox, a case, an engine inlet, an engine exhaust, a mounting pad or other mounting hardware component, or the like.

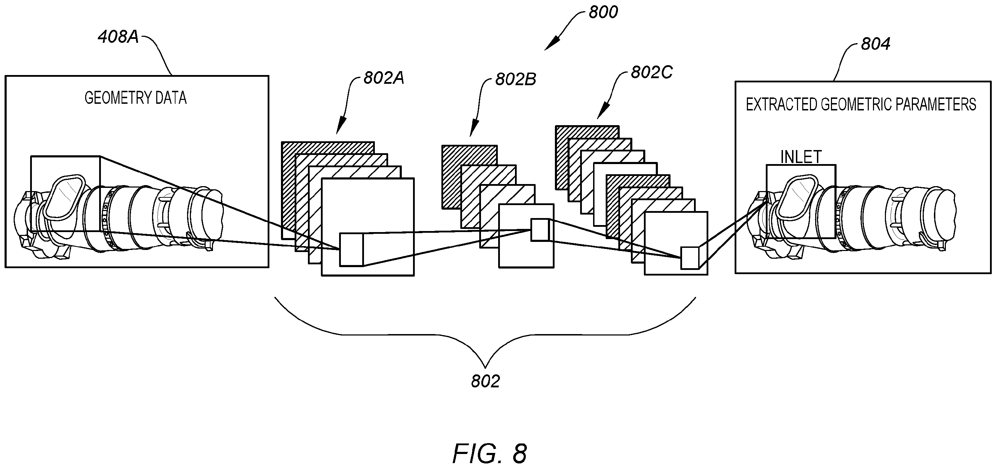

Step 502 includes execution of the extraction component 604A of the Al model 600. Execution of the extraction component 604A includes the use of one or more of the neural networks 602A-n to extract geometric parameters (e.g., geometric features, propulsion system and/or engine component geometries, and other parameters of interest) from the geometry data 408A. The extraction component 604A may use one or more CNNs or other 2D image and/or 3D model processing neural networks of the neural networks 602A-n to extract the geometric parameters from the geometry data 408A. FIG. 8 diagrammatically illustrates an exemplary CNN 800 of the neural networks 602A-n which may be executed by the computer system 400 for the extraction component 604A of the Al model 600. The CNN 800 of FIG. 8 includes a plurality of layers 802 including an input layer 802A, one or more hidden layers 802B (e.g., convolutional layers), and an output layer 802C. Each of the layers 802 includes neurons connected to one or more, but not all, of the neurons in the preceding and/or following layers 802. The CNN 800 of FIG. 8 receives the geometry data 408A at the input layer 802A. The CNN 800 extracts geometric parameters 804 of the geometry data 408A and provides the extracted geometric parameters 804 at the output layer 802C. The extracted geometric parameters 804 are stored in the database 406 for the geometry data 408A (e.g., the 2D images and 3D models). Of course, the present disclosure is not limited to a CNN or to the foregoing exemplary CNN 800 for execution of the extraction component 604A to extract the geometric parameters 804 from the geometry data 408A.

Step 504 includes training the Al model 600 for propulsion system and/or engine structural design using the extracted geometric parameters of Step 502 (e.g., the geometric parameters 804; see FIG. 8) and the historical data 408. In particular, training the Al model 600 for propulsion system and/or engine structural design includes training the Al model 600 using the extracted geometric parameters and operational parameters of preexisting propulsion system and/or engine designs (hereinafter "operational data" 408B) of the historical data 408 stored in the database 406. The operational data 408B includes operational parameters of the preexisting propulsion system designs which are a function of the propulsion system architecture of those preexisting propulsion system designs. The operational data 408B may include operational parameters such as, but not limited to, carcass loads (e.g., structural loads resulting from propulsion system or propulsion system component weight), rotor blade tip clearances, propulsion system component inertial loads (e.g., at a component center of gravity), propulsion system thrust characteristics, static structure component weights, static structure component material characteristics, propulsion system component (e.g., a flange) bending moments, propulsion system component fit up (e.g., steps and gaps), and case (and other static structure) temperatures, deflections, and/or fluid exposure pressures. The operational data 408B may also include functional characteristics of individual propulsion system and/or engine components as well as a relationship (e.g., a functional relationship, a mechanical or fluid interconnection or contact, etc.) of these individual components to one or more other components of a propulsion system and/or engine. The operational parameters of the operational data 408B may be provided for different preexisting propulsion system operating conditions such as, but not limited to, engine power levels, aircraft air speeds and maneuvering transients, atmospheric temperatures and pressures, aircraft altitudes, and the like. The operational parameters of the operational data 408B may be the product of experimental testing, simulation, analysis, and/or computer modeling for the preexisting propulsion system designs.

Step 504 includes execution of the characterization component 604B of the Al model 600. Execution of the characterization component 604B includes the use of one or more of the neural networks 602A-n to associate the extracted geometric parameters from the geometry data 408A (see Step 502) with the operational parameters of the operational data 408B, for example, by identifying functional relationships and/or patterns of and between the extracted geometric parameters and the operational parameters of the operational data 408B. The characterization component 604B may use one or more RNNs (e.g., a LSTM neural network) or another suitable neural network configured to identify patterns and parameter associations from large quantities of data. The characterization component 604B may, therefore, identify a correlation factor (e.g., a correlation strength, a correlation weighting, etc.) of the extracted geometric parameters and the operational parameters. The associations identified by the characterization component 604B may be stored in the database 406 with the geometry data 408A (e.g., the extracted geometry parameters) and the operational data 408B (e.g., the operational parameters).

Step 506 includes determining a plurality of combinations of the extracted geometric parameters which satisfy a plurality of predetermined design constraints 520 (e.g., stored in the database 406) for the design of the aircraft propulsion system. The design constraints 520 include at least one customer constraint 520A and at least one technical constraint 520B. The at least one customer constraint 520A includes constraints such as, but not limited to, propulsion system mounting positions on an associated aircraft, propulsion system envelope (e.g., nacelle envelope) limits, propulsion system weight limits, propulsion system aerodynamic specifications, and propulsion system power, performance, maneuvering, or other propulsion requirements. The at least one technical constraint 520B includes constraints such as, but not limited to, acceptable values or value ranges of rotor blade tip clearances, propulsion system component inertial loads, flange bending moments, propulsion system component fit up (e.g., steps and gaps), and case

(and other static structure) temperatures, deflections, and/or fluid exposure pressures. These technical constraints 520B may be representative of propulsion system structure and/or engine structure best practices.

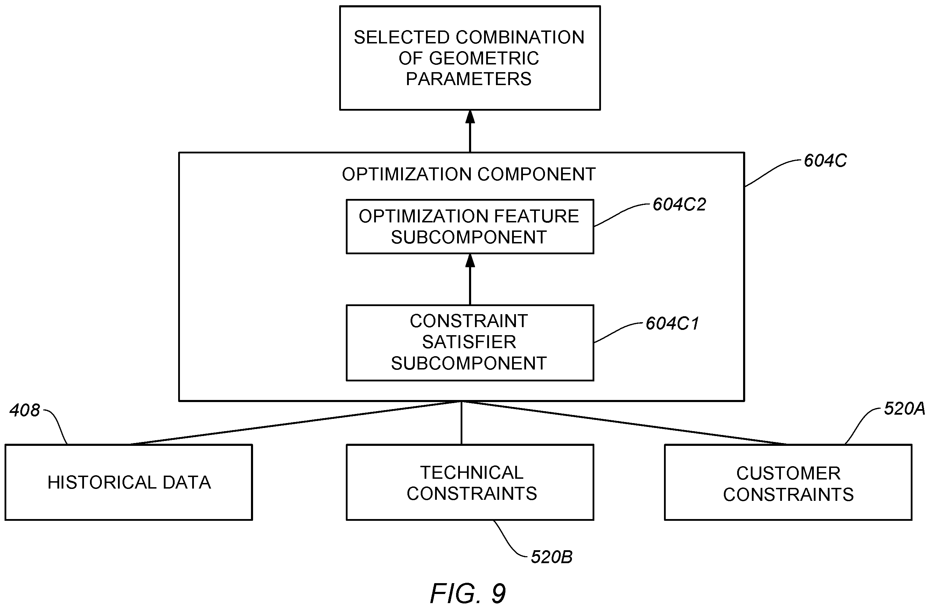

Step 506 includes execution of the optimization component 604C of the Al model 600. FIG. 9 shows a block diagram depicting the optimization component 604C in greater detail. The optimization component 604C includes a constraint satisfier subcomponent 604C1 and an optimization function subcomponent 604C2. Execution of the constraint satisfier subcomponent 604C1 includes the use of one or more of the neural networks 602A-n to identify each combination of the extracted geometric parameters which satisfies each of the design constraints 520 (e.g., the customer constraints 520A and the technical constraints 520B), for example, using the associated operational parameters and/or correction factors for the extracted geometric parameters. As used herein, a "combination" of the extracted geometric parameters refers to the propulsion system and/or engine geometric parameters define the geometric design characteristics of all or substantially all of a structural architecture (e.g., a static structure) of a propulsion system and/or engine. Satisfaction of each of the design constraints 520 is determined, at least in part, using the associated operational parameters for the extracted geometric parameters (see Step 504).

Execution of the optimization function subcomponent 604C2 includes analyzing each of the plurality of combinations of the extracted geometric parameters which satisfy the design constraints 520, and selecting one combination from the plurality of combinations for the preliminary structural architecture design. In particular, the optimization function subcomponent 604C2 selects an optimal combination from the plurality of combinations. The selected optimal combination may be identified as providing the least expected engine deflection and the greatest performance for the customer constraints 520A and the technical constraints 520B, relative to other combinations of the extracted geometric parameters which satisfy the customer constraints 520A and the technical constraints 520B. For example, the optimization function subcomponent 604C2 may determine a performance factor of the customer constraints 520A and the technical constraints 520B for each combination of the extracted geometric parameters identified by the constraint satisfier subcomponent 604C1. The optimization function subcomponent 604C2 may determine the performance factor based on the extent to which a particular combination of the extracted geometric parameters meets or exceeds a respective one of the customer constraints 520A or the technical constraints 520B. The optimization function subcomponent 604C2 may identify the selected optimal combination based on a weighting function of the performance factors. For example, the performance factors for the customer constraints 520A and/or the technical constraints 520B may be assigned a weighting (e.g., by a user) reflecting their relative importance for selecting an optimal combination of the extracted geometric parameters. The optimization component 604C (e.g., the constraint satisfier subcomponent 604C1 and the optimization function subcomponent 604C2) may use one or more VAEs, GANs, genetic algorithms, mathematical models, analytic models, linear regression, or other suitable neural networks and/or algorithms.

Step 508 includes generating one or more 2D images (e.g., 2D drawings) and/or one or more 3D models of the preliminary structural architecture design of the aircraft propulsion system including the selected combination of the extracted geometric parameters (see Step 506). Step 508 includes execution of the design generator component 604D to generate the 2D images and/or 3D models of the preliminary structural architecture design using the selected combination of the extracted geometric parameters. The design generator component 604D may use one or more GANs, VAEs, or other suitable neural networks to generate the 2D images and/or 3D models of the preliminary structural architecture design.

Step 510 includes executing a finite element method (FEM) analysis of the preliminary structural architecture design, for example, at (e.g., with) the computer system 400 (e.g., the processor 402). The FEM analysis may identify (e.g., predict) an engine deflection for the preliminary structural architecture design as well as performance and satisfaction of the preliminary structural architecture design for the customer constraints 520A and the technical constraints 520B. The computer system 400 may identify an acceptance or a rejection of the preliminary structural architecture design based on the results of the FEM analysis. Where the computer system 400 identifies a rejection of the preliminary structural architecture design, the Method 500 may include reperformance of the Step 508 to execute the design generator component 604D to generate 2D images and/or 3D models of a new preliminary structural architecture design using the selected combination of the extracted geometric parameters. Where the computer system 400 identifies a rejection of the preliminary structural architecture design, the computer system 400 may identify, using the FEM analysis, one or more components of the preliminary structural architecture design which contributed or were likely to have contributed to failing to satisfying one or more of the customer constraints 520A and/or technical constraints 520B, and provide this information as feedback to the Al model 600 for generating the new preliminary structural architecture design.

Step 512 includes verification of the preliminary structural architecture design and the 2D images and/or 3D models of the preliminary structural architecture design by a human user. Once the preliminary structural architecture design has been identified (e.g., by the computer system 400) as accepted for the FEM analysis, the computer system 400 may prompt a user to review and approve or reject the preliminary structural architecture design and the 2D images and/or 3D models of the preliminary structural architecture design. For example, the computer system 400 may display the preliminary structural architecture design and the 2D images and/or 3D models of the preliminary structural architecture design on a user interface of the computer system 400 for user review. The user may approve or reject all or a portion of the preliminary structural architecture and the 2D images and/or 3D models of the preliminary structural architecture design. Where the user rejects all or a portion of the preliminary structural architecture design and the 2D images and/or 3D models of the preliminary structural architecture design, the Method 500 may include reperformance of the Step 508 to execute the design generator component 604D to generate 2D images and/or 3D models of a new preliminary structural architecture design using the selected combination of the extracted geometric parameters.

Step 514 includes preparing a final propulsion system design for the propulsion system using the preliminary structural architecture design. The final propulsion system design may be prepared using any design process, equipment, testing, or the like conventionally known in the art, and the present disclosure is not limited to any particular final propulsion system design process. Step 516 includes storing parameters, 2D images, 3D models, and FEM analysis data, geometry data, operational data, testing data, and/or other descriptive data of the final propulsion system design as additional historical data 408 (e.g., geometry data 408A and operational data 408B) in the database 406 for subsequent use by the Al model 600. Subsequently, the aircraft propulsion system may be manufactured using the final propulsion system design.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof, while remaining within the scope of the invention as defined by the appended claims. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. Thus, the scope of protection is not limited by the foregoing description and/or accompanying drawings; rather, the scope of protection is limited only by the appended claims.

## Claims

1. A method (500) for generating a preliminary design of a propulsion system structural architecture for an aircraft propulsion system, the method comprising:
generating (508), with an artificial intelligence, Al, model (600) at a computer system (400), one
or both of at least one two-dimensional image and/or at least one three-dimensional model of the preliminary design (606) including a selected combination of geometric parameters (804),
wherein the Al model has been trained for both:
a propulsion system geometry using the geometric parameters extracted from historical geometry data (408A), and
a propulsion system structural design using the geometric parameters and operational parameters of historical operational data (408B), the operational parameters associated with the geometric parameters, and
wherein training (502) the Al model included identifying (506) the selected combination of the geometric parameters of the preliminary design, with the Al model, by:
determining a plurality of combinations of the extracted geometric parameters and the associated operational parameters which satisfy each of at least one technical constraint (520B) and at least one customer constraint (520A), and
selecting the selected combination of the geometric parameters from the plurality of combinations of the extracted geometric parameters using the associated operational parameters.

2. The method of claim 1, wherein the historical geometry data includes one or both of an engine mounting hardware dimension or an engine mounting hardware location for at least one historical propulsion system; and/or
wherein the historical geometry data includes one or both of at least one historical two-dimensional image or at least one historical three-dimensional model for at least one historical propulsion system.

3. The method of claim 1 or 2, wherein the associated operational parameters include one or more of a carcass load, a rotor blade tip clearance, a component inertial load, a component bending moment, a component deflection, a propulsion system thrust characteristic, a component weight, a component material characteristic, a component temperature, or a component fluid exposure pressure for at least one historical propulsion system; and/or
wherein associating the extracted geometric parameters with the operational parameters includes identifying a correlation factor between at least one geometric parameter of the extracted geometric parameters and at least one operational parameter of the associated operational parameters.

4. The method of any preceding claim, further comprising:
executing (510), at the computer system, a finite element method (FEM) analysis of the one or both of at least one two-dimensional image or at least one three-dimensional model of the preliminary design; and
identifying, at the computer system, an acceptance or a rejection of the preliminary design using the FEM analysis.

5. The method of any preceding claim, wherein the Al model includes a plurality of neural networks (602A-n), and the plurality of neural networks includes at least a convolutional neural network (800).

6. The method of any preceding claim, wherein the at least one customer constraint includes one or more of a propulsion system mounting position, a propulsion system envelope, a propulsion system weight limit, a propulsion system aerodynamic specification, a propulsion system maneuvering requirement, or a propulsion system propulsion requirement.

7. The method of any preceding claim, further comprising preparing (514) a final propulsion system design of the propulsion system structural architecture using the preliminary design.

8. The method of claim 7, further comprising storing (516) the final propulsion system design with historical data (408) in a database (406), and the historical data includes the historical geometry data and the historical operational data.

9. A system (400) for generating a preliminary design of a propulsion system structural architecture for an aircraft propulsion system, the system comprising:
a processor (402) in communication with a non-transitory memory (404) storing instructions, which instructions when executed by the processor, cause the processor to:
execute an artificial intelligence, Al, model (600) trained for both:
a propulsion system geometry using geometric parameters (804) extracted from historical geometry data (408A) and stored in the memory (404); and
a propulsion system structural design using the geometric parameters and operational parameters of historical operational data (408B), the operational parameters associated with the geometric parameters and stored in the memory; and
identify a selected combination of the geometric parameters of the preliminary design, with the Al model, by:
determining a plurality of combinations of the extracted geometric parameters and the associated operational parameters which satisfy each of at least one technical constraint (520B) and at least one customer constraint (520A), and
selecting the selected combination of the geometric parameters from the plurality of combinations of the extracted geometric parameters using the associated operational parameters including an expected engine deflection of the propulsion system and weighted performance factors of the at least one technical constraint and the at least one customer constraint; and
generate, with the Al model, one or both of at least one two-dimensional image and/or at least one three-dimensional model of the preliminary design including the selected combination of the geometric parameters.

10. The system of claim 9, wherein:
the Al model includes a plurality of neural networks (602A-n) and the instructions, when executed by the processor, further cause the processor to:
train (502) the Al model for the propulsion system geometry including extracting the geometric parameters of the historical geometry data with at least one first neural network of the plurality of neural networks; and
train (504) the Al model for the propulsion system structural design including associating the extracted geometric parameters with the operational parameters with at least one second neural network of the plurality of neural networks; and
the at least one first neural network is different than the at least one second neural network.

11. The system of claim 10 or 11, wherein generating the one or both of at least one two-dimensional image and/or at least one three-dimensional model of the preliminary design includes generating the one or both of at least one two-dimensional image and/or at least one three-dimensional model of the preliminary design including the selected combination of the geometric parameters with at least one third neural network of the plurality of neural networks, and the at least one third neural network is different than the at least one first neural network and the at least one second neural network.

12. The system of any of claims 9 to 11, wherein the historical geometry data includes one or both of at least one historical two-dimensional image or at least one historical three-dimensional model for at least one historical propulsion system; and/or
wherein the associated operational parameters include one or more of a carcass load, a rotor blade tip clearance, a component inertial load, a component bending moment, a component deflection, a propulsion system thrust characteristic, a component weight, a component material characteristic, a component temperature, or a component fluid exposure pressure for at least one historical propulsion system.

13. A method for generating a preliminary design of an engine structural architecture for an aircraft (1000), the method comprising:
generating, with an artificial intelligence (AI) model (600) at a computer system (400), one or both of at least one two-dimensional image and/or at least one three-dimensional model of the preliminary design including a selected combination of geometric parameters (804), and the Al model has been trained for both:
an engine structure geometry using the geometric parameters extracted from historical geometry data for the engine structure geometry, and
an engine structural design using the geometric parameters and operational parameters of historical operational data, the operating parameters associated with the geometric parameters, and
training the Al model included identifying the selected combination of the geometric parameters of the preliminary design with the Al model, the selected combination of the geometric parameters satisfying at least one technical constraint (520B) and at least one customer constraint (520A).

14. The method of claim 13, wherein the historical geometry data includes one or both of an engine mounting hardware (304, 356) dimension or an engine mounting hardware location for at least one historical propulsion system (20); and/or
wherein the historical geometry data includes one or both of at least one historical two-dimensional image or at least one historical three-dimensional model for at least one historical propulsion system.

15. The method of claim 13 or 14, wherein the associated operational parameters include one or more of a carcass load, a rotor blade tip clearance, a component inertial load, a component bending moment, a component deflection, a propulsion system thrust characteristic, a component weight, a component material characteristic, a component temperature, or a component fluid exposure pressure for at least one historical propulsion system; and/or
wherein associating the extracted geometric parameters with the operational parameters includes identifying a correlation factor between at least one geometric parameter of the extracted geometric parameters and at least one operational parameter of the associated operational parameters.
